# EUROPÄISCHE PATENTSCHRIFT

(11) **EP 0 421 100 B1**
(45) Veröffentlichungstag und Bekanntmachung des Hinweises auf die Patenterteilung: **27.10.1993**
(21) Anmeldenummer: 90115796.6
(22) Anmeldetag: 17.08.1990
(51) Int. Cl.: G01N 21/25, G01N 21/27

(54) **Verfahren und Vorrichtung zum Erkennen von Gefahrenzuständen in einem Raum**
Procedure and equipment for recognizing dangerous conditions in a room
Procédé et dispositif pour reconnaître des conditions dangereuses dans une pièce

(30) Priorität: 18.08.1989 DE 3927355
(43) Veröffentlichungstag der Anmeldung: 10.04.1991
(73) Patentinhaber: Minimax GmbH, 23843 Bad Oldesloe (DE)
(72) Erfinder: Schierau, Klaus, Dipl.-Ing., D-2411 Sandesneben (DE)
(74) Vertreter: Lüdtke, Frank

(56) Entgegenhaltungen:
- AT-B- 357 348
- DE-A- 3 023 625
- DE-A- 3 512 861
- DE-A- 3 625 490
- DE-A- 3 738 179
- US-A- 3 102 257
- US-A- 4 914 719

## Beschreibung

Die Erfindung betrifft ein Verfahren zum Erkennen von Gefahrenzuständen in einem Raum, wobei die Zusammensetzung eines Gasgemisches dadurch analysiert wird, daß das Gasgemisch einer breitbandigen Strahlung einer Strahlungsquelle ausgesetzt und die durch das Gasgemisch hindurchtretende Strahlung von mehreren Detektoren in verschiedenen Wellenlängenbereichen erfaßt wird.

Ein derartiges Verfahren dient dazu, Mischungen von Gasen, die für Menschen, Tiere oder Sachen gefährlich sind, zu erkennen. Bekannte Verfahren verwenden hierzu Analysegeräte, die beispielsweise die unterschiedliche Wärmeleitfähigkeit oder Absorptionsfähigkeit verschiedener Gase ausnutzen. Beispielsweise wird bei der Prüfung auf Kohlendioxydanteile (Rauchgasprüfung) die Verringerung der Wärmeleitfähigkeit des Gasgemisches bei zunehmender Konzentration an Kohlendioxydgas in Luft ausgewertet. Hierzu wird der Widerstandswert eines Heizdrahtes gemessen, der vom Gasgemisch umspült ist. Bei einer bestimmten zugeführten elektrischen Leistung nimmt die Temperatur des Heizdrahtes zu, wenn infolge verringerter Wärmeleitfähigkeit die vom Heizdraht an seine Umgebung abgegebene Wärmeenergie abnimmt. Diese Temperaturerhöhung äußert sich im Widerstandswert, dessen Änderung ein Maß für die Kohlendioxydkonzentration im Gasgemisch ist.

Andere Verfahren nutzen die Absorptionsfähigkeit bestimmter Gase für Infrarotstrahlung zur Gasanalyse aus. Die der Raumluft entnommene Luftprobe mit die Infrarotstrahlung absorbierenden Gasanteilen heizt sich auf einen höheren Temperaturwert auf, als eine Vergleichsprobe ohne solche Gasanteile. Aus der Temperaturerhöhung kann dann auf das Vorhandensein eines bestimmten Gases im Gasgemisch geschlossen werden.

Beim Überwachen brandgefährdeter oder explosionsgefährdeter Räume, wie beispielsweise elektrischer Schalträume, Schaltschränke oder Lagerräume mit gefährlichen Materialien, besteht das Problem, das Vorhandensein gasförmiger Spaltprodukte, die zum Beispiel durch thermische Belastung infolge Sonneneinstrahlung oder Brand entstehen können, bereits bei geringen Konzentrationen zu erkennen, um frühzeitig Gegenmaßnahmen einzuleiten, bevor ein mit diesen Spaltprodukten angereichertes Gasgemisch einen kritischen Zustand erreicht. Man möchte gefährliche Entwicklungen erkennen können, bevor z.B. ein Brand oder eine andere Katastrophe ausbricht, um geeignete Gegenmaßnahmen rechtzeitig ergreifen zu können.

Die oben genannten Verfahren reagieren nur mit geringer Selektivität auf verschiedenartige Gaskomponenten und setzen sehr konstante Umgebungsbedingungen voraussetzen, die im allgemeinen nicht anzutreffen sind. Ein erheblicher Nachteil liegt insbesondere im langsamen Meßvorgang zum Bestimmen der Zusammensetzung des Gasgemisches, da jeweils thermische Ausgleichsvorgänge abgewartet werden müssen, bis ein stabiles und zuverlässiges Analysenergebnis vorliegt. Ein frühzeitiges Erkennen von Gefahrenzuständen ist mit diesem Verfahren nicht möglich.

Es ist Aufgabe der Erfindung, ein neues Verfahren und eine Vorrichtung zu seiner Durchführung anzugeben, das mit einfachen Mitteln ein schnelles und zuverlässiges Erkennen von Gefahrenzuständen mit hoher Selektivität für verschiedene Gaskomponenten ermöglicht.

Diese Aufgabe wird für ein eingangs genanntes Verfahren dadurch gelöst, daß die Ausgangssignale der Detektoren mit vorgegebenen Schwellwerten verglichen werden, die jeweils einer bestimmten Gaskonzentration in dem Gasgemisch zugeordnet sind, wobei als Vergleichsergebnis ein Bitmuster erzeugt wird, daß mehrere Referenzbitmuster bereit gestellt werden, die Zusammensetzungen des Gasgemisches definieren, und daß abhängig vom Vergleich des erzeugten Bitmusters mit den Referenzbitmustern ein Zustandssignal ausgegeben wird, das den Gefahrenzustand kennzeichnet.

Die Erfindung beruht auf der Erkenntnis, daß jedes Gas einen charakteristischen Wellenlängenbereich hat, in dem es Strahlung absorbieren kann. Wenn nun eine Strahlung mit einem breitbandigen Spektrum das Gasgemischdurchsetzt, so ist in den für die Gase charakteristischen Wellenlängenbereichen am Ort der Detektoren jeweils die Strahlungsleistung verringert, wenn entsprechende Gaskomponenten im Gasgemisch enthalten sind. Die von einem Detektor empfangene Strahlungsleistung wird in seinem Ausgangssignal wiedergegeben. Die absorbierte Strahlungsleistung und damit auch die Amplitude dieses Ausgangssignals ist abhängig von der Konzentration des Gases in dem Gasgemisch.

Durch die Verwendung mehrerer Detektoren kann die Strahlung in mehreren Wellenlängenbereichen oder Absorptionsbändern gleichzeitig ausgewertet werden. Dadurch hat das verwendete Verfahren eine hohe Selektivität für verschiedene Gase und es können in einem einzigen Meßvorgang komplexe, für bestimmte Gefahrenzustände charakteristische Zusammensetzungen des Gasgemisches mit unterschiedlichen Gasen analysiert werden. Das Überschreiten bestimmter Gaskonzentrationen wird beim Vergleich mit vorgegebenen Schwellwerten in einem Bitmuster dargestellt.

Die möglichen Zusammensetzungen des Gasgemisches aus verschiedenen Gaskomponenten und deren jeweilige Konzentration werden in Referenzbitmustern abgebildet. Diese können entweder durch Simulation, durch Abschätzung oder durch Einmessen mit bekannten Gasgemischen erzeugt werden. Jedem Referenzbitmuster wird ein Wert eines Zustandssignals zugeordnet, der einen bestimmten Gefahrenzustand kennzeichnet. Werden beispielsweise vierstellige Bitmuster verwendet, d.h. sowohl das beim Vergleich mit den Ausgangssignalen der Detektoren erzeugte Bitmuster als auch die Referenzbitmuster haben jeweils vier Binärstellen, so sind maximal 16 Referenzbitmuster möglich sowie 16 Werte des Zustandssignals. Gemäß diesem Wertebereich des Zustandssignals können Gefahrenzustände in feinen Abstufungen signalisiert werden.

Beim Vergleich der Bitmuster wird das mit dem erzeugten Bitmuster übereinstimmende Referenzbitmuster festgestellt, und der diesem zugeordnete Wert des Zustandssignals ausgegeben, beispielsweise an eine übergeordnete Zentrale. Dieser Bitmustervergleich, der beispielsweise mit Hilfe eines Mikrorechners auf einen einfachen Binärzahlenvergleich zurückgeführt werden kann, läßt sich auf sehr einfache Weise in kurzer Zeit durchführen. Auch das verwendete Meßprinzip arbeitet praktisch verzögerungsfrei. Beides zusammen führt dazu, daß die Zusammensetzung des Gasgemisches schnell analysiert und ein Gefahrenzustand frühzeitig erkannt wird. Das Verfahren nach der Erfindung kann daher vorteilhaft für die kontinuierliche Überwachung von Räumen eingesetzt werden, bei der dem Raum fortlaufend eine Luftprobe entnommen wird und das Ergebnis sofort angezeigt werden soll. Es ist aber auch für den intermittierenden Betrieb geeignet, bei dem nur zu vorbestimmten Zeitpunkten dem Raum eine Luftprobe entnommen wird. Die letztgenannte Betriebsart kann vorteilhaft dann eingesetzt werden, wenn mehrere Räume gleichzeitig zu überwachen und die den Räumen entnommenen Luftproben nacheinander nach dem erfindungsgemäßen Verfahren auszuwerten sind.

Bei einem bevorzugten Ausführungsbeispiel der Erfindung ist vorgesehen, daß die von der Strahlungsquelle abgestrahlte breitbandige Strahlung so geregelt wird, daß sie am Ort der Detektoren konstant ist. Durch diese Maßnahmen werden Schwankungen der Strahlungsquelle infolge Alterung oder Verschmutzung ausgeregelt. Als zu regelnde Größe wird die Strahlung am Ort der Detektoren verwendet. Dadurch wird ein eindeutiger Bezugspunkt für den Maximalwert des Ausgangssignals eines Detektors festgelegt, welcher bei fehlender Absorption und damit bei Fehlen des entsprechenden Gases abgegeben wird. Ist dieses Gas im Gasgemisch der Luftprobe jedoch enthalten, so verringert sich das Ausgangssignal abhängig von der Konzentration des Gases. Das auf seinen Maximalwert bezogene Ausgangssignal ist somit ein Maß für diese Konzentration.

Die beim Durchsetzen der Strahlung durch die Luftstrekke von den Gaskomponenten absorbierte Strahlungsenergie fehlt am Ort der Detektoren, so daß infolge des Regelmechanismus die abgestrahlte Energiemenge um den entsprechenden Betrag angehoben wird. Dies ändert den Bezugspunkt für den Maximalwert des Ausgangssignals des jeweiligen Detektors und führt zu einem Meßfehler. Dieser ist aber so gering, daß er vernachläßigbar ist, denn der Wellenlängenbereich, in dem Strahlung absorbiert wird, ist sehr schmal und die auf ihn entfallende Energie sehr klein.

In einer weiteren Ausgestaltung der vorgenannten Weiterbildung ist vorgesehen, daß die von der Strahlungsquelle abgestrahlte breitbandige Strahlung auf verschiedene Intensitätswerte konstant geregelt wird, daß jedem Wert ein Satz von Referenzbitmustern zugeordnet wird, und daß das Zustandssignal für jeden Intensitätswert erzeugt wird. Durch diese Maßnahme wird es möglich, die Zusammensetzung des Gasgemisches in sehr feinen Konzentrationsabstufungen zu analysieren, ohne daß die Schwellwerte geändert werden müssen.

Als Beispiel hierfür sei angenommen, daß ein Detektor bei einem ersten Intensitätswert der Strahlung ein Ausgangssignal abgibt, das niedriger ist als sein Schwellwert. Dies bedeutet, daß die Konzentration des zu detektierenden Gases höher als die dem Schwellwert zugeordnete Konzentration ist. Der genaue Konzentrationswert ist aber unbekannt. Durch Erhöhen der Strahlungsintensität auf einen zweiten Wert, erhöht sich auch das Ausgangssignal des Detektors entsprechend. Dieses Erhöhen kann stufenweise oder kontinuierlich so lange erfolgen, bis der Schwellwert überschritten wird, was sich im Bitmuster durch Änderung des Binärwerts äußert. Wenn nun jedem Intensitätswert ein Satz von Referenzbitmustern mit verschiedenen Werten des Zustandssignals zugeordnet wird, kann durch Vergleich des erzeugten Bitmusters mit den Referenzbitmustern der im Raum vorliegende Gefahrenzustand mit hoher Genauigkeit erkannt werden.

Eine andere Ausführungsform der Erfindung zeichnet sich dadurch aus, daß zum Regeln der Strahlungsintensität ein Stellsignal erzeugt wird, dessen Änderung über der Zeit überwacht wird, und daß abhängig von der Größe der Änderung ein den Betriebszustand der Strahlungsquelle und/oder der Meßstrecke kennzeichnendes Funktionssignal erzeugt wird. Das Stellsignal eines eingeschwungenen Regelkreises ist, wenn keine weiteren Störgrößen auf ihn einwirken, über der Zeit konstant, d.h. seine zeitliche Änderung ist gleich Null. Umgekehrt bedeutet dies, daß im Regelkreis wirkende Störgrößen zu einer zeitlichen Änderung des Stellsignals führen. Dieser Effekt wird ausgenutzt, um Betriebszustände der Strahlungsquelle und/oder der Meßstrecke durch ein Funktionssignal darzustellen.

Zum Beispiel eine Verschmutzung oder ein Nachlassen der abgestrahlten Strahlungsenergie der Strahlungsquelle infolge Alterung äußern sich in einer über der Zeit langsamen Zunahme des Stellsignals. Dieser als normal zu bezeichnende Betriebszustand wird einem bestimmten Wert des Funktionssignals zugeordnet, beispielsweise einem bestimmten Spannungs- oder Strompegel. Wenn die Strahlungsquelle ausfällt, beispielsweise infolge eines Wackelkontaktes oder eines Durchbrennens des Glühfadens, so ändert sich das Stellsignal sofort in Richtung höherer Strahlungsleistung, da der Regelkreis bestrebt ist, dem Nachlassen der Strahlungsleistung entgegenzuwirken. Diese schnelle Änderung wird festgestellt und als Betriebsfehler im Funktionssignal abgebildet.

Durch die Maßnahmen der Weiterbildung kann aber auch der Zustand der Meßstrecke erkannt werden. Enthält die Luftprobe nämlich Aerosole, zum Beispiel Rauchteilchen, so wird die Strahlung infolge breitbandiger Absorption und Streuung längs der Meßstrecke stark abgeschwächt. Da der Regelmechanismus dieser Abschwächung durch Erhöhung der abgestrahlten Strahlungsleistung entgegenwirkt, muß sich auch das Stellsignal entsprechend ändern. Die Höhe seiner zeitlichen Änderung ist charakteristisch für den Zustand des Gasgemisches und wird durch das Funktionssignal angezeigt. Die weitere Auswertung des Funktionssignals kann dann beispielsweise zu einer Brandmeldung führen.

Ein weiteres vorteilhaftes Ausführungsbeispiel nach der Erfindung ist dadurch gekennzeichnet, daß abhängig vom Zustandssignal der zeitliche Verlauf des Ausgangssignal mindestens eines Detektors erfaßt wird und/oder bei Unterschreiten eines Gefährdungsschwellwertes ein Gefahrensignal erzeugt wird. Durch diese Maßnahme ist es möglich, die Konzentration einer bestimmten Gaskomponente im Gasgemisch genau zu überwachen. Dies ist dann sinnvoll, wenn man anhand des zuvor festgestellten Zustandssignals erkennt, daß ein kritischer Zustand vorliegt, beispielsweise, wenn das Gasgemisch einen bestimmten Kohlenmonoxidgehalt aufweist. Durch das Erfassen des zeitlichen Verlaufes des Ausgangssignals desjenigen Detektors, der Strahlung im für Kohlenmonoxid charakteristischen Wellenlängenbereich empfängt, kann die Annäherung der Kohlenmonoxidkonzentration an eine Gefährdungsgrenze gezielt überwacht und eine Zunahme oder eine Abnahme des Kohlenmonoxidgehalts im weiteren Verlauf angezeigt werden.

Eine andere Möglichkeit der Auswertung kann darin bestehen, den Absolutwert des Ausgangssignals des Detektors zu überwachen. Wenn dieses Signal infolge der erhöhten Absorption der Strahlung im betreffenden Wellenlängenbereich einen Gefahrenschwellwert, der einer vorgegebenen Gaskonzentration entspricht, unterschreitet, so wird ein Gefahrensignal erzeugt und an eine Zentrale ausgegeben. Diese veranlaßt dann entsprechende Alarmmeldungen.

An Stelle einer in der Meßkammer angeordneten breitbandigen Lichtquelle, deren Strahlung durch Atome oder Moleküle des zu analysierenden Gasgemisches bei bestimmten Wellenlängen absorbiert wird, kann auch eine geregelte Flamme vorgesehen sein, deren Temperatur zwischen 3300°C und weniger als 1000°C einstellbar ist und durch die die Gase des zu analysierenden Gasgemisches zur Emission eines für sie typischen Banden- oder Linienspektrums angeregt werden können. D.h., daß die Erkennung der Gase nicht nur durch die Auswertung des Absorptionsspektrums sondern auch durch die Auswertung des Emissionsspektrums erfolgen kann.

Die Analyse des zu untersuchenden Gasgemisches kann noch dadurch vervollständigt werden, daß neben der Analyse des elektromagnetischen Spektrums auch die Wärmeleitfähigkeit des untersuchten Gasgemisches gemessen wird. Diese Messung liefert einen weiteren charakteristischen Wert für ein charakteristisches Meßmuster, das einem bestimmten Gasgemisch und damit auch unter Umständen einem bestimmten Gefahrenzustand entspricht.

Die Erfindung betrifft ferner eine Einrichtung zum Durchführen des vorstehend beschriebenen Verfahrens mit einer Meßkammer, in der eine Detektoranordnung mit mehreren Detektoren angeordnet ist, denen jeweils ein Strahlungsfilter vorgeschaltet ist und welche die das Gasgemisch durchsetzende Strahlung in unterschiedlichen Wellenlängenbereichen erfassen und in elektrische Ausgangssignale wandeln. Dabei ist erfindungsgemäß eine Schwellwertschalteranordnung vorgesehen, die durch Vergleich der Ausgangssignale mit Schwellwerten ein Bitmuster erzeugt, das in einer Auswertungseinheit mit gespeicherten Referenzbitmustern verglichen wird, wobei die Auswertungseinheit abhängig vom Vergleichsergebnis ein Zustandssignal erzeugt. Ausgestaltungen der erfindungsgemäßen Vorrichtung sind in den weiteren Unteransprüchen angegeben.

Weitere Merkmale und Vorteile der Erfindung ergeben sich aus den weiteren Unteransprüchen und der folgenden Beschreibung, welche in Verbindung mit den beigefügten Zeichnungen die Erfindung anhand von Ausführungsbeispielen beschreibt. Es zeigen:
- Figur 1: eine Einrichtung mit einer Meßkammer zum Durchführen des Verfahrens nach der Erfindung,
- Tabelle 1: Wellenlängenbereiche der Absorption verschiedener Gase,
- Figur 2: eine schematische Darstellung des Regelkreises zum Regeln der Strahlungsintensität der Strahlungsquelle,
- Figur 3: ein Blockschaltbild einer Schaltungsanordnung zum Erzeugen von Zustandssignalen,
- Figur 4: ein Diagramm zur Erläuterung der Auswertung der zeitlichen Änderung des Stellsignals,
- Figur 5: eine schematische Darstellung einer zweiten Ausführungsform einer erfindungsgemäßen Meßeinrichtung und
- Figur 6: eine schematische Darstellung einer dritten Ausführungsform der erfindungsgemäßen Meßeinrichtung.

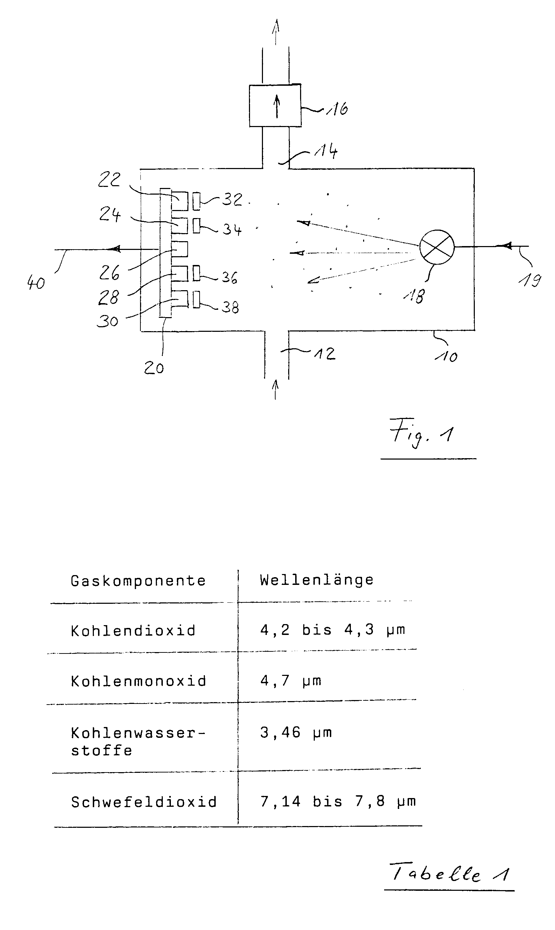

In Figur 1 ist eine Einrichtung zum Feststellen der Zusammensetzung eines Gasgemisches dargestellt, das einer Meßkammer 10 über eine Lufteintrittsöffnung 12 zugeführt wird. Das Gemisch oder die Luftprobe wird durch eine Pumpe 16 angesaugt, die einer Luftaustrittsöffnung 14 nachgeordnet ist und die Luftprobe wieder aus der Meßkammer 10 entfernt. In der Kammer 10 ist eine Strahlungsquelle 18 angeordnet, die über Zuleitungen 19 mit elektrischer Energie versorgt wird. Die Strahlungsquelle 18 sendet breitbandige elektromagnetische Strahlung bevorzugt im Wellenlängenbereich von 1 Mikrometer bis 20 Mikrometer aus. Als Strahlungsquelle 18 können eine Wolfram-Glühfadenlampe oder eine Nernst-Lampe verwendet werden.

Die Strahlung der Strahlungsquelle 18 durchsetzt die Luftprobe in der Meßkammer 10 und trifft auf eine Detektoranordnung 20, auf der Detektoren 22 bis 30 angeordnet sind. Die Detektoren 22 bis 30 sind als Thermosäulen ausgebildet, die die auftreffende Strahlung in Wärmeenergie umwandeln und die als Ausgangssignale der Temperaturdifferenz zur Umgebung proportionale Spannungen über die mehrdrahtige Leitung 40 abgeben. Die jeweilige Temperaturdifferenz und damit das Ausgangssignal ist direkt proportional der auf den jeweiligen Detektor 22 bis 30 auffallenden Strahlungsleistung.

Dem Detektor 22 ist ein Interferenzfilter 32 vorgeschaltet, das nur Strahlung eines bestimmten Absorptionswellenlängenbereichs durchläßt, der für ein bestimmtes Gas charakteristisch ist. Weiterhin sind den Detektoren 24, 28 und 30 Interferenzfilter 34, 36 bzw. 38 mit jeweils unterschiedlichem Wellenlängenbereich einer bestimmten Gaskomponente vorgeschaltet. Der Detektor 26 ist nicht mit einem Interferenzfilter versehen, sondern empfängt die durch die Luftprobe hindurchtretende Strahlung in einem breiten Wellenlängenbereich. Er dient, wie noch beschrieben wird, zur Regelung der Strahlungsintensität der Strahlungsquelle 18.

In der Tabelle 1 sind die für verschiedene Gaskomponenten charakteristischen Wellenlängenbereiche angegeben, in denen die Strahlung absorbiert wird. Beispielsweise hat das Gas Kohlendioxid einen Wellenlängenbereich von 4,2 bis 4,3 µm, in dem es bevorzugt Strahlungsenergie absorbiert.

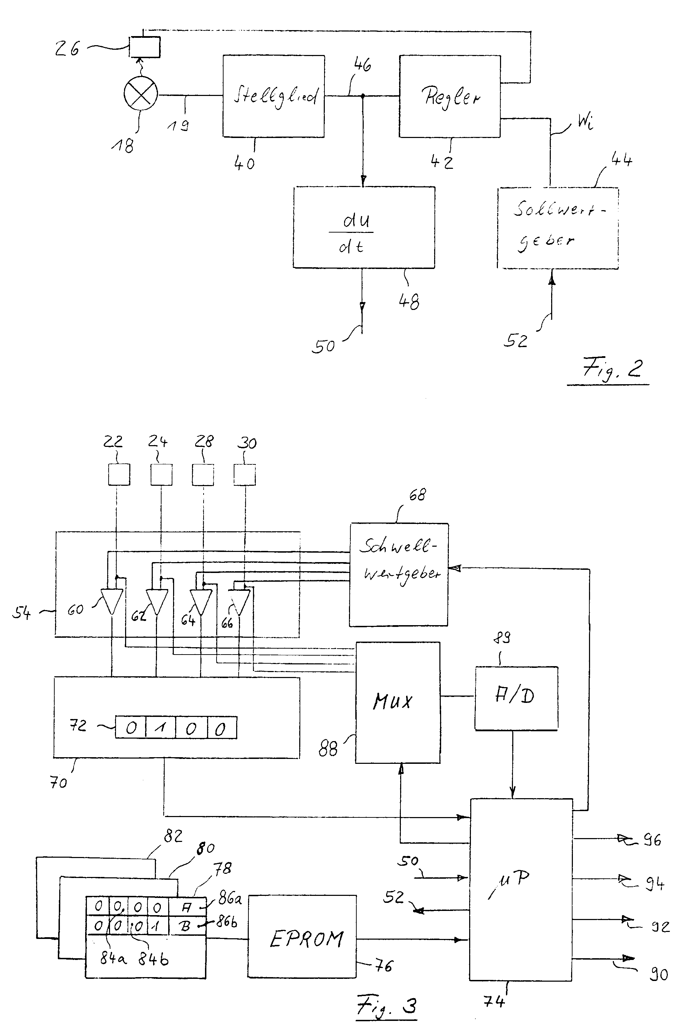

In Figur 2 ist in einem Blockschaltbild die Regelung der Strahlungsintensität der Strahlungsquelle 18 dargestellt. Der Detektor 26 empfängt die Strahlung der Strahlungsquelle 18 in einem breitbandigen Wellenlängenbereich. Sein Signal wird einem Regler 42 zugeführt, der einen Soll-Istwertvergleich mit einem Sollwert Wi eines Sollwertgebers 44 durchführt. Abhängig vom Vergleichsergebnis erzeugt der Regler 42 ein Stellsignal 46, das auf ein Stellglied 40 einwirkt, welches die Strahlungsquelle 18 über die Leitung 19 mit elektrischer Leistung versorgt. Der Sollwertgeber 44 wird über ein Steuersignal 52 angesteuert, und gibt abhängig von diesem Signal definierte Sollwerte Wi mit i = 1,2,3,.. ab.

Das Stellsignal 46 wird ferner einem Differentialbaustein 48 zugeführt, der die zeitliche Änderung des Stellsignals 46 ermittelt. Abhängig von der Größe dieser Änderung erzeugt er ein Funktionssignal 50, welches den Betriebszustand der Strahlungsquelle und/oder der Meßstrecke kennzeichnet, wie noch näher erläutert wird.

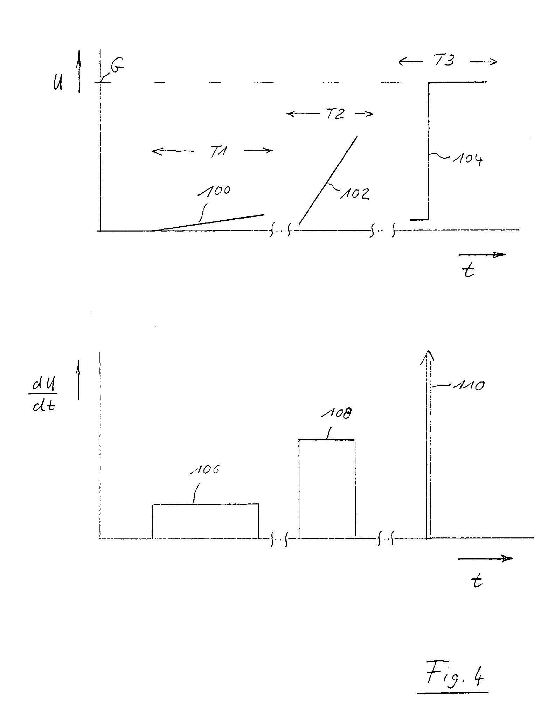

Eine Schaltungsanordnung zum Auswerten der Ausgangssignale der Detektoren 22, 24, 28, 30 ist in einem Blockschaltbild in der Figur 3 dargestellt. Die Signale der Detektoren 22, 24, 28, 30 werden einem Schwellwertbaustein 54 zugeführt, der Schwellwertschalter 60, 62, 64, 66 hat. Diesen werden mit Hilfe eines Schwellwertgebers 68 Schwellwerte in Form von Spannungssignalen zugeführt, denen jeweils eine bestimmte Gaskonzentration eines Gases zugeordnet sind. Diese Schwellwerte werden in einem Einmeßvorgang mit Luftproben, die ein bestimmtes Gas mit einer definierten Konzentration ermittelt, gefunden. Die vom Schwellwertgeber 68 abgegebenen Schwellwerte sind änderbar und werden über ein von einem Mikroprozessor 74 abgegebenes Signal eingestellt.

Die Schwellwertschalter 60 bis 66 vergleichen die Ausgangssignale der Detektoren 22 bis 30 jeweils mit entsprechenden Schwellwerten des Schwellwertgebers 68 und bilden wiederum Ausgangssignale die das Überschreiten bzw. Unterschreiten des jeweiligen Schwellwerts anzeigen. Die Signale der Schwellwertschalter 60 bis 66 werden einem Datenumsetzer 70 zugeführt, der aus ihnen einen Binärwert 72 bildet. Der Binärwert 72 wird dem Mikroprozessor 74 an seinem Digitaleingang zugeführt.

Der Mikroprozessor 74 ist mit einem Datenspeicher 76 verbunden, in dem sein abzuarbeitendes Programm sowie Daten gespeichert sind. Zu diesen Daten gehören auch Referenzbitmuster 84a, 84b, die zu Referenzbitmustersätzen 78, 80, 82 zusammengefaßt sind. Jeder Satz 78, 80, 82 ist einem bestimmten Sollwert Wi zugeordnet. In jedem Referenzbitmustersatz 78, 80, 82 sind die möglichen Kombinationen des Binärwerts des Bitmusters 72, das aus den Ausgangssignalen der Detektoren 22 bis 30 erzeugt wird, für jeweils einen Sollwert Wi enthalten. Jedem Bitmuster 84a, 84b ist ein Wert 86a, 86b zugeordnet, der einen bestimmten Gefahrenzustand kennzeichnet. In diesem Beispiel sind dies die Werte A bzw. B. Diese Werte werden in einem Einmeßvorgang mit vorgegebenen Mischungen von Gasen, die bestimmten Gefahrenzuständen entsprechen, bestimmt.

Der Mikroprozessor 74 führt den Vergleich des erzeugten Bitmusters 72 mit den Referenzbitmustern 84a, 84b eines Bitmustersatzes 78 durch, und stellt das passende Referenzbitmuster fest. Der diesem Referenzbitmuster 84a, 84b zugeordnete Wert A, B wird als Zustandssignal 96 vom Mikroprozessor 74 ausgegeben.

Für eine genauere Analyse des Gasgemisches veranlaßt der Mikroprozessor 74 über sein Signal 52 die Ausgabe eines weiteren Sollwertes Wi der Strahlungsstärke der Strahlungsquelle 18. Die Auswertung der Ausgangssignale der Detektoren 22 bis 30 erfolgt dann in der bereits beschriebenen Art und Weise, wobei zum Vergleich auf den dem neuen Sollwert Wi zugeordneten Satz 78, 80, 82 von Referenzbitmustern zugegriffen wird.

Die Ausgangssignale der Detektoren 22 bis 30 werden auch einem Multiplexerbaustein 88 zugeführt, der sie abhängig vom Signal des Mikroprozessors 74 an einen Analog-Digital-Wandler 89 durchschaltet. Dieser wandelt das Analogsignal in ein Digitalsignal um und führt dieses einem Digitaleingang des Mikroprozessors 74 zu. Damit besteht die Möglichkeit, einzelne Ausgangssignale der Detektoren 22 bis 30 in ihrem zeitlichen Verlauf zu überwachen. Dies ist dann vorteilhaft, wenn sich die Konzentration eines Gases einem kritischen Wert nähert und dieser Verlauf mit hoher Genauigkeit erfaßt werden muß. Das Überwachen eines bestimmten Ausgangssignales eines Detektors 22 bis 30 kann zum Beispiel durch einen bestimmten Wert des Zustandssignals 96 veranlaßt werden, der einen kritischen Gefahrenzustand signalisiert.

Der Mikroprozessor 74 vergleicht den vom Analog-Digital-Wandler 89 abgegebenen Digitalwert mit einem Gefährdungsschwellwert und gibt abhängig von diesem Vergleich an seinem Ausgang ein Gefahrensignal 94 ab.

Das vom Differentialbaustein 48 abgegebene Funktionssignal 50 wird dem Mikroprozessor 74 an seinem Digitaleingang zugeführt. Der Mikroprozessor 74 wertet dieses Signal aus, in welchem der Betriebszustand der Strahlungsquelle 18 sowie der Zustand der Meßstrecke abgebildet ist und gibt an seinem Ausgang ein entsprechendes Betriebszustandssignal 92 bzw. ein Alarmsignal 90 ab. An Hand dieser Signale 92 bzw. 90 kann die Durchführung von Pflegearbeiten an der Meßkammer veranlaßt werden, ein Betriebsfehler oder das Vorhandensein von Rauch im Raum erkannt werden.

In Figur 4 ist der Spannungsverlauf U über der Zeit t des Stellsignals 46 für verschiedene Betriebszustände der Strahlungsquelle 18 sowie der Meßstrecke dargestellt. Im unteren Bildteil ist der Differentialquotient der Spannung U nach der Zeit t für die verschiedenen Betriebszustände angegeben. In einem Zeitabschnitt T1 ist ein Spannungsverlauf 100 des Stellsignals 46 wiedergegeben, der bei Normalbetrieb auftritt. Durch Verschmutzen der Strahlungsquelle 18 sowie durch Alterung nimmt die Strahlungsintensität der Strahlungsquelle 18 im Laufe der Zeit ab. Der Regelmechanismus wirkt dem entgegen und erhöht die der Strahlungsquelle 18 zugeführte elektrische Leistung. Dies macht sich in einem langsamen Ansteigen der Spannung U des Stellsignals 46 bemerkbar. Der zu diesem Verlauf gehörende Differentialquotient über der Zeit t mit dem Kurvenverlauf 106 ist im unteren Bildteil wiedergegeben. In einem weiteren Zeitabschnitt T2 ist der Anstieg der Spannung U steiler als im vorherigen Beispiel (Kurve 102). Ein solcher Anstieg ist charakteristisch für eine Änderung der Meßstrecke, beispielsweise wenn die Luftprobe Rauchgas enthält. Dadurch tritt eine erhebliche Schwächung der von der Strahlungsquelle 18 ausgesendeten Strahlung ein, die der Regelkreis auszugleichen sucht, mit der Folge, daß die Spannung U des Stellsignals 46 steil ansteigt. Dies äußert sich auch im Kurvenverlauf 108 des Differentialquotienten der Spannung U über der Zeit t (unterer Bildteil der Figur 4).

In einem dritten Zeitabschnitt T3 steigt die Spannung U des Stellsignals 46 abrupt bis zu einem Grenzwert G an (Kurvenverlauf 104). Im Differentialquotienten äußert sich dies in einem Dirac-Impuls 110. Ein solcher Kurvenverlauf ist typisch für einen Ausfall der Betriebsspannung der Strahlungsquelle 18 bzw. für ein Durchbrennen des Glühfadens.

Durch Auswerten der Änderung des Verlaufs des Stellsignals 46 über der Zeit t, ausgedrückt im Differentialquotienten der Spannung U nach der Zeit t, können die charakteristischen Kurvenverläufe 100, 102, 104 bzw. 106, 108, 110 zur Definition von Betriebszuständen verwendet werden. Dabei bekommt insbesondere dem Kurvenverlauf 102 bzw. 108 eine für das Erkennen eines Gefahrenzustandes besondere Bedeutung zu, da anhand dieser Verläufe das Vorhandensein eines Brandes festgestellt werden kann.

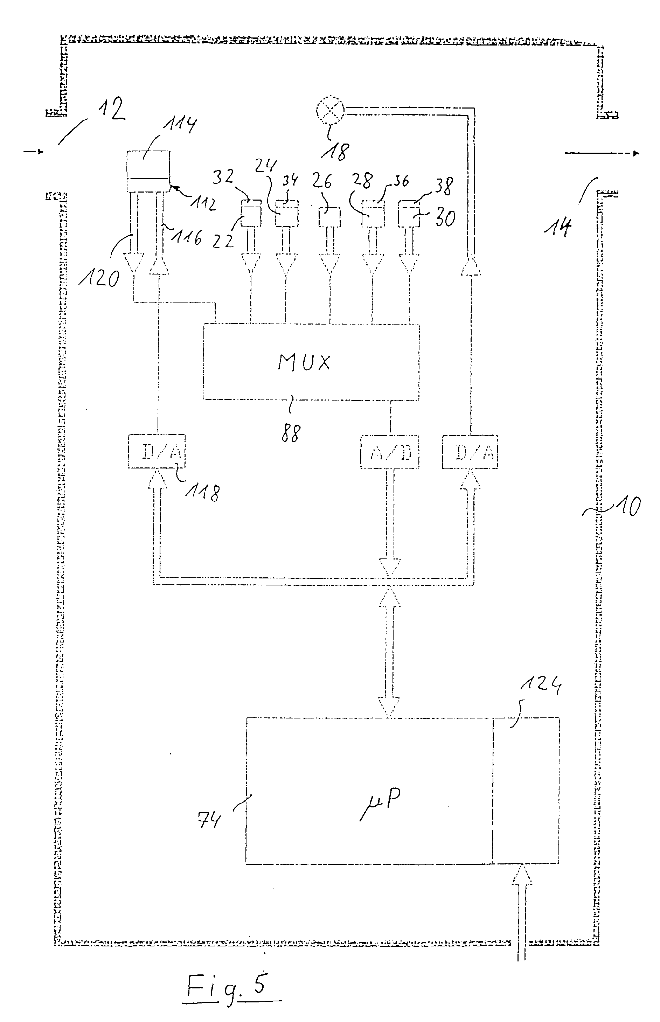

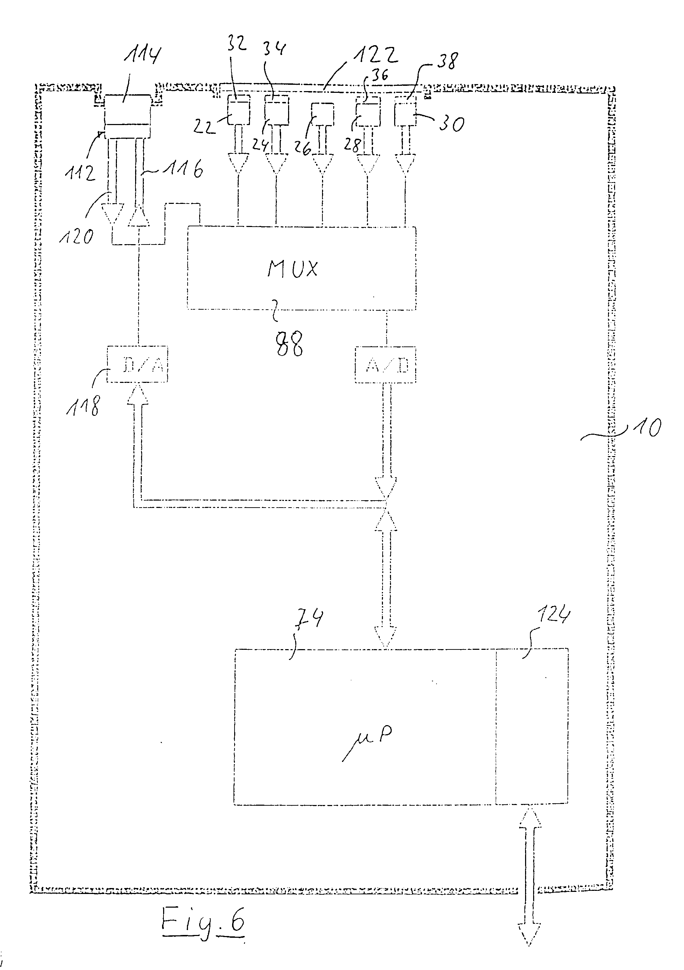

Bei den in den Figuren 5 und 6 dargestellten Ausführungsbeispielen sind die gleichen Teile wie bei der Ausführungsform gemäß den Figuren 1 bis 4 mit gleichen Bezugszeichen versehen. Die Ausführungsform gemäß Figur 5 unterscheidet sich von jener der Figur 1 dadurch, daß neben den Infrarotsensoren 22 bis 30 ein Wärmeleitfähigkeitssensor 112 innerhalb der Meßkammer 10 angeordnet ist, der durch eine aus einem Sintermetall bestehende diffusionsfähige Abdeckung 114 abgedeckt ist.

Der Eingang 116 des Sensors 112 ist mit dem Mikroprozessor 74 verbunden, so daß der Sensor 112 vom Mikroprozessor her über einen Digital/Analogwandler 118 angesteuert werden kann. Der Ausgang 120 des Sensors 112 ist mit dem Multiplexer 88 verbunden.

Als Wärmeleitfähigkeitssensor wird vorzugsweise ein Sensor in Silicium-Mikromechanik-Ausführung verwendet. Das eigentliche Sensorelement besteht aus drei Siliciumchips, die so aufeinander gestapelt sind, daß Hohlräume gebildet werden, in die das zu messende Gas gelangen kann. Die Hohlräume und die Siliciumchips werden durch eine Membran voneinander getrennt, die elektrisch und thermisch gut isoliert. Auf der Membran befinden sich Dünnfilm-Widerstandsmäander, die als Heizung und zur Temperaturmessung dienen. Der Sensor ist durch eine spezielle Passivierung vor Umwelteinflüssen geschützt. Die gesamte Chipanordnung befindet sich auf einem Keramikträger. Die elektrische Kontaktierung kann durch Bondung auf einem TO-8-Sockel erfolgen.

Mittels der Heizung kann die Wärmeleitfähigkeit unter der Steuerung des Mikroprozessors 74 in sehr kurzen Zeitabständen bei unterschiedlichen Temperaturen gemessen, d.h. die Wärmeleitfähigkeit als Funktion der Temperatur ermittelt werden. Dabei wird die Heizwendel bzw. der Heizmäander durch vom Mikroprozessor 74 über den D/A-Wandler 118 gelieferte Signale nacheinander auf unterschiedliche Temperaturwerte geregelt, wobei der Temperatur-Istwert dem Mikroprozessor über den Multiplexer 88 wieder zugeführt wird. Ferner wird die Temperatur eines weiteren Widerstandmäanders gemessen, der von dem Heizmäander durch das zu analysierende Gasgemisch getrennt ist. Unter der Voraussetzung, daß eine Wärmeleitung über Materialbrücken zwischen dem Heizmäander und dem weiteren Widerstandsmäander sowie eine Wärmeübertragung durch Wärmestrahlung vernachlässigbar ist, kann man aus der Temperaturdifferenz zwischen den beiden Widerstandsmäandern die Wärmeleitfähigkeit des Gasgemisches bei verschiedenen Temperaturen ermitteln.

Der so ermittelte Verlauf der Wärmeleitfähigkeit als Funktion der Temperatur wird dann im Mikroprozessor 74 mit Wärmeleitfähigkeitskurven verglichen, die für bekannte Gasgemische oder Gas/Dampfgemische empirisch ermittelt und gespeichert wurden. Somit läßt sich aus der Messung der Wärmeleitfähigkeit als Funktion der Temperatur eine Aussage über die Zusammensetzung des zu analysierende Gas- oder Gas/Dampfgemisches machen.

Der Wärmeleitfähigkeitssensor liefert daher weitere für das zu analysierende Gasgemisch bzw. für ein bestimmtes Gas innerhalb dieses Gasgemisches charakteristische Daten, die das Meßmuster, das von den IR-Sensoren 22 bis 30 geliefert wird, ergänzen können. Dadurch wird die Genauigkeit, mit der sich eine bestimmte Zusammensetzung des Gasgemisches ermitteln läßt, weiter erhöht.

Bei der bisher beschriebenen Ausführungsformen wurde stets davon ausgegangen, daß das Absorptionsspektrum der zu analysierenden Gase ausgewertet wird. Es besteht jedoch auch die Möglichkeit, an Stelle der Breitbandstrahlungsquelle eine geregelte Flamme, beispielsweise eine Knallgasflamme zu verwenden, deren Temperatur von maximal 3300°C (bei Knallgasgebläsen) auf Werte unter 1000°C einstellbar ist. Mit dieser Flamme werden die zu untersuchenden Gase zum Emittieren elektromagnetischer Strahlung angeregt, so daß das Emissionsspektrum ausgewertet werden kann. Bei Verwendung von Wasserstoff-Sauerstoffgemischen für die Flamme ergibt sich für die Hintergrundsstrahlung ein hoher Anteil, der auf gasförmiges H₂O zurückzuführen ist. Hinzu kommen die Anteile, die durch den erhitzten Gasstrom gebildet werden. Bei reiner Luft sind dies im wesentlichen Strahlungen, die durch Sauerstoff und Stickstoff sowie durch den natürlich vorhandenen Anteil von CO₂ angeregt werden.

Befinden sich im zugeführten Luftstrom andere Gase, Dämpfe und/oder Aerosole, dann kommt es unter Umständen zu einer Aufspaltung in der Flammenzone und/oder zu zusätzlichen Redoxvorgängen. In jedem Falle werden sich zusätzliche Spektren entwickeln, deren Arten (Banden und/oder Linien) Lage und Intensitäten von der Flammentemperatur und der Zusammensetzung der Beimischungen zum Luftstrom abhängen.

Bei der Ausführungsform gemäß Figur 6 ist keine geregelte Lichtquelle vorhanden. Die Meßkammer 10 ist geschlossen. Die Abdeckung 114 des Wärmeleitfähigkeitssensors 112 ragt durch eine Wand der Meßkammer 10 hindurch, so daß Gas von außen her an den Sensor 112 durch die Abdeckung 114 hindurch gelangen kann. In der Wand der Meßkammer 10 ist ferner ein optisch breitbandiges Fenster 122 vorgesehen, durch das die auszuwertende Strahlung auf die IR-Sensoren 22 bis 30 fallen kann.

Ein solcher Sensor ist in der Lage, die von Flammen eines Brandes ausgehenden Strahlungen zu analysieren und gleichzeitig über Wärmeleitfähigkeitsmessungen Gasuntersuchungen durchzuführen. Hier handelt es sich also um einen Detektor, der für den bekämpfenden Brandschutz bestimmt ist und der aufgrund seiner multiplen Meßwerterfassung Aussagen über den Brandverlauf und die am Brand beteiligten Stoffe treffen kann.

Mit den vorstehend beschriebenen Sensorarrays oder mehrfunktionalen Detektoren wird in erster Linie das Ziel verfolgt, einen einheitlichen Detektor zu schaffen, der vielfältig verwendbar ist. Mit den gleichen Detektoreinheiten können sowohl Aufgaben des vorbeugenden Brandschutzes, des bekämpfenden Brandschutzes als auch solche aus dem Bereich der Prozeßoptimierung gelöst werden. Ferner können mit den vorstehend beschriebenen Detektoren Meßforderungen des Umweltschutzes bewältigen werden. Beispielsweise kann die erfindungsgemäße Sensoranordnung auch als Meßeinheit für das Ermitteln von Abgaszusammensetzungen verwendet werden.

Die erfindungsgemäße Sensoranordnung kann kompakt in ihrem Aufbau und preiswert hergestellt werden. Damit der Detektor möglichst universal eingesetzt werden kann, ist es zweckmäßig, ihn mit einer genormten Schnittstelle 124 zu versehen, über welche die gemessenen Werte übertragen werden können.

Mit dem erfindungsgemäßen Detektor ist es möglich, Ereignisse und Zustände, z.B. während eines Prozeßablaufes zu erfassen, die auf eine gefährliche Entwicklung hindeuten, die zu einer Katastrophe führen kann. Es ist damit möglich, Entwicklungen zu beobachten, die unmittelbar mit dem durch andere Sensoren oder Überwachungsgeräte beobachteten Prozeß nichts zu tun haben. So kann das Auftreten prozeßfremder Gase und Dämpfe oder elektromagnetischer Strahlung auf Gefährdungszustände hinweisen, die in einen Brand oder in eine Explosion münden. Diese Gefährdungszustände können mit der erfindungsgemäßen Detektoranordnung erfaßt werden, so daß sich diese insbesondere für die Überwachung von Gebäuden, Lagern aber auch für die Überwachung besonders wertvoller Objekte wie Computern und dergleichen eignen.

## Patentansprüche

1. Verfahren zum Erkennen von Gefahrenzuständen in einem Raum, wobei die Zusammensetzung eines Gasgemisches dadurch analysiert wird, daß das Gasgemisch einer breitbandigen Strahlung einer Strahlungsquelle (18) ausgesetzt und die durch das Gasgemisch hindurchtretende Strahlung von mehreren Detektoren (22, 24, 28, 30) in verschiedenen Wellenlängenbereichen erfaßt wird, dadurch **gekennzeichnet**, daß die Ausgangssignale der Detektoren (22, 24, 28, 30) mit vorgegebenen Schwellwerten verglichen werden, die jeweils einer bestimmten Gaskonzentration in dem Gasgemisch zugeordnet sind, wobei als Ergebnis ein Bitmuster (72) erzeugt wird, daß mehrere Referenzbitmuster (84a, 84b) bereitgestellt werden, die die Zusammensetzungen des Gasgemisches definieren, und daß abhängig vom Vergleich des erzeugten Bitmusters (72) mit den Referenzbitmustern (84a, 84b) ein Zustandssignal (96) ausgegeben wird, das den Gefahrenzustand kennzeichnet.

2. Verfahren nach Anspruch 1, dadurch **gekennzeichnet**, daß die von der Strahlungsquelle (18) abgestrahlte breitbandige Strahlung so geregelt wird, daß sie am Ort der Detektoren (22, 24, 26, 28, 30) konstant ist.

3. Verfahren nach Anspruch 2, dadurch **gekennzeichnet**, daß auf verschiedene Intensitätswerte konstant geregelt wird, daß jedem Wert ein Satz (78, 80, 82) von Referenzbitmustern zugeordnet wird, und daß das Zustandssignal (96) für jeden Intensitätswert erzeugt wird.

4. Verfahren nach Anspruch 2 oder 3, dadurch **gekennzeichnet**, daß zum Regeln der Strahlungsintensität ein Stellsignal (46) erzeugt wird, dessen Änderung über der Zeit überwacht wird, und daß abhängig von der Größe der Änderung ein den Betriebszustand der Strahlungsquelle (18) und/oder der Meßstrecke kennzeichnendes Funktionssignal (50, 90, 92) erzeugt wird.

5. Verfahren nach einem der Ansprüche 2 bis 4, dadurch **gekennzeichnet**, daß zur Ermittlung der konstanten Strahlung am Ort der Detektoren (22, 24, 28, 30) ein Referenzdetektor (26) verwendet wird, der die Strahlung in einem breitbandigen Wellenlängenbereich erfaßt.

6. Verfahren nach einem der vorhergehenden Ansprüche, dadurch **gekennzeichnet**, daß abhängig vom Zustandssignal (96) der zeitliche Verlauf des Ausgangssignals mindestens eines Detektors (22, 24, 28, 30) erfaßt wird und/oder beim Unterschreiten eines Gefährdungsschwellwertes ein Gefahrensignal (94) erzeugt wird.

7. Verfahren nach einem der Ansprüche 1 bis 6, dadurch **gekennzeichnet**, daß eine Probe des zu analysierenden Gasgemisches durch eine die Detektoren (22, 24, 26, 28, 30) enthaltende Meßkammer (10) hindurchgeleitet wird.

8. Verfahren nach einem der Ansprüche bis 7, dadurch **gekennzeichnet**, daß an Stelle einer breitbandigen Lichtquelle (18) eine geregelte Flamme verwendet wird, deren Temperatur zwischen 3300°C und ca. 800°C einstellbar ist, um die Gase des zu analysierenden Gasgemisches zur Emission elektromagnetischer Strahlung in für sich typischen Wellenlängenbereichen zu veranlassen.

9. Verfahren nach einem der Ansprüche 1 bis 8, dadurch **gekennzeichnet**, daß gleichzeitig mit der Erfassung der Absorptions- und/oder Emissionsspektren des untersuchten Gasgemisches die Wärmeleitfähigkeit desselben gemessen wird.

10. Verfahren nach Anspruch 9, dadurch **gekennzeichnet**, daß die Wärmeleitfähigkeit des Gasgemisches oder Gas/Dampfgemisches in einem Meßintervall bei unterschiedlichen Temperaturen gemessen wird und daß der Verlauf der Wärmeleitfähigkeit als Funktion der Temperatur ermittelt und mit die Wärmeleitfähigkeit in Abhängigkeit der Temperatur darstellenden Funktionen verglichen wird, die für bekannte Gasgemische oder Gas/Dampfgemische ermittelt und gespeichert wurden.

11. Einrichtung zum Durchführen des Verfahrens nach einem der Ansprüche 1 bis 10 mit einer Meßkammer (10), in der eine Detektoranordnung (20) mit mehreren Detektoren (22, 24, 28, 30) angeordnet ist, denen jeweils ein Strahlungsfilter (32, 34, 36, 38) vorgeschaltet ist und welche eine ein Gasgemisch durchsetzende Strahlung in unterschiedlichen Wellenlängenbereichen erfassen und in elektrische Ausgangssignale wandeln, dadurch **gekennzeichnet,** daß eine Schwellwertschalteranordnung (54) vorgesehen ist, die durch Vergleich der Ausgangssignale mit Schwellwerten, die jeweils einer bestimmten Gaskonzentration in dem Gasgemisch zugeordnet sind, ein Bitmuster (72) erzeugt, daß eine Auswertungseinheit vorgesehen ist, in der Referenzbitmuster, die die zusammensetzung des Gasgemisches definieren, gespeichert sind, wobei das erzeugte Bitmuster in der Auswertungseinheit (74) mit dem gespeicherten Referenzbitmustern (84a, 84b) verglichen wird, und die Auswertungseinheit (74) abhängig vom Vergleichsergebnis ein Zustandssignal (96) erzeugt, das den Gefahrenzustand kennzeichnet.

12. Einrichtung nach Anspruch 11, dadurch **gekennzeichnet**, daß die Detektoranordnung (20) ferner einen Referenzdetektor (26) enthält, welcher die das Gasgemisch durchsetzende Strahlung breitbandig empfängt und dessen Signal einem Regler (42) zuführbar ist, der die Strahlungsintensität der Strahlungsquelle (18) auf einen konstanten Wert am Ort der Detektoren (22 bis 30) regelt.

13. Einrichtung nach Anspruch 12, dadurch **gekennzeichnet**, daß ein Sollwertgeber (44) vorgesehen ist, der unterschiedliche Werte (Wi) der Strahlungsintensität vorgibt, und daß für jeden Wert (Wi) ein Satz (78, 80, 82) von Referenzbitmustern speicherbar ist.

14. Einrichtung nach einem der Ansprüche 12 bis 13, dadurch **gekennzeichnet**, daß der Regler (42) ein Stellsignal (46) an ein Stellglied (40) abgibt, und daß ein Differentialbaustein (48) vorgesehen ist, der die zeitliche Änderung des Stellsignals (46) ermittelt und abhängig von der Größe der Änderung ein Funktionssignal (50) erzeugt.

15. Einrichtung nach einem der Ansprüche 11 bis 14, dadurch **gekennzeichnet**, daß als Detektoren (22, 24, 28, 30) und als Referenzdetektor (26) Thermosäulen vorgesehen sind.

16. Einrichtung nach einem der Ansprüche 11 bis 15, dadurch **gekennzeichnet**, daß in der Meßkammer (10) im Abstand zu der Detektoranordnung (20) eine breitbandige Strahlungsquelle (18) angeordnet ist.

17. Einrichtung nach Anspruch 16, dadurch **gekennzeichnet**, daß als Strahlungsquelle (18) eine Nernst-Lampe vorgesehen ist.

18. Einrichtung nach einem der Ansprüche bis 17, dadurch **gekennzeichnet**, daß als Filter (32, 34, 36, 38) Interferenzfilter mit einer für die Absorptionswellenlängen von bestimmten Gasen durchlässigen Filtercharakteristik vorgesehen sind.

19. Einrichtung nach einem der Ansprüche bis 18, dadurch **gekennzeichnet**, daß die Meßkammer (10) eine Einlaß- und eine Auslaßöffnung (12; 14) zum Durchtritt einer Probe des zu analysierenden Gasgemisches hat.

20. Einrichtung nach einem der Ansprüche 11 bis 19, dadurch **gekennzeichnet**, daß in der Meßkammer (10) ein Wärmeleitfähigkeitssensor (112) zur Messung der Wärmeleitfähigkeit des zu analysierenden Gasgemisches angeordnet ist, dessen Ausgang mit der Auswertungseinheit (74) verbunden ist und der mit einer diffusionsfähigen Abdeckung (114) versehen ist.

21. Einrichtung nach Anspruch 20, dadurch **gekennzeichnet**, daß der Wärmeleitfähigkeitssensor (112) Mittel enthält, um die Wärmeleitfähigkeit innerhalb eines Meßintervalls bei unterschiedlichen Temperaturen entlang eines vorgegebenen Temperaturverlaufes zu messen, daß die Auswerteeinheit (74) einen Vergleicher umfaßt, um die als Funktion der Temperatur gemessene Wärmeleitfähigkeit mit der Wärmeleitfähigkeit zu vergleichen, die als Funktion der Temperatur für bekannte Gasgemische und/oder Gas/Dampfgemische in der Auswerteeinheit (74) gespeichert ist.

22. Einrichtung nach Anspruch 21, dadurch **gekennzeichnet**, daß der Wärmeleitfähigkeitssensor (112) aus drei Siliciumchips besteht, die unter Bildung von Hohlräumen zur Aufnahme des zu analysierenden Gasgemisches aufeinandergestapelt sind, wobei die Hohlräume und die Siliciumchips durch thermisch und elektrisch isolierende Membranen voneinander getrennt sind, auf denen Widerstandsmäander zur Heizung und Temperaturmessung angeordnet sind.

## Claims

1. A method of recognising dangerous states in a room, the composition of a gas mixture being analysed by subjecting the gas mixture to wide-band radiation from a radiation source (18), and the radiation travelling through the gas mixture being detected by a number of detectors (22, 24, 28, 30) at various wavelength ranges, characterised in that the output signals from the detectors (22, 24, 28, 30) are compared with preset threshold values each associated with a given gas concentration in the gas mixture, the result being generated in the form of a bit pattern (72), a number of reference bit patterns (84a, 84b) being prepared and defining the compositions of the gas mixture, and a signal of state (96) characterising the dangerous state being delivered in dependence on the comparison between the generated bit pattern (72) and the reference bit patterns (84a, 84b).

2. A method according to claim 1, characterised in that the wide-band radiation from the source (18) is adjusted so as to be constant at the place of the detectors (22, 24, 26, 28, 30).

3. A method according to claim 2, characterised in that the adjustment is made constant at various intensity values, a set (78, 80, 82) of reference bit patterns is associated with each value, and the signal of state (96) is generated for each intensity value.

4. A method according to claim 2 or 3, characterised in that in order to adjust the radiation intensity, an adjusting signal (46) is generated, the alteration with time is monitored and, depending on the extent of the alteration, a function signal (50, 90, 92) characterising the state of operation of the radiation source (18) and/or of the measuring section is generated.

5. A method according to any of claims 2 to 4, characterised in that for the purpose of detecting the constant radiation at the place of the detectors (22, 24, 28, 30) a reference detector (26) is used and detects the radiation over a wide-band wavelength range.

6. A method according to any of the preceding claims, characterised in that, depending on the signal (96) of state, the variation in time of the output signal of at least one detector (22, 24, 28, 30) is detected and/or a danger signal (94) is generated if the value falls below a danger threshold value.

7. A method according to any of claims 1 to 6, characterised in that a sample of the gas mixture under test is conveyed through a measuring chamber (10) containing the detectors (22, 24, 26, 28, 30).

8. A method according to any of claims 1 to 7, characterised in that the wide-band light source (18) is replaced by a controlled flame having a temperature adjustable between 3300°C and about 800°C, in order to cause the gases in the mixture under test to emit electromagnetic radiation in typical wavelength ranges.

9. A method according to any of claims 1 to 8, characterised in that the thermal conductivity of the gas mixture under test is measured at the same time as the absorption and/or emission spectrum thereof is detected.

10. A method according to claim 9, characterised in that the thermal conductivity of the gas mixture or gas and vapour mixture is measured over a measuring interval at various temperatures, and the variation in thermal conductivity is determined as a function of temperature and compared with functions which represent the thermal conductivity in dependence on temperature and have been obtained and stored for known gas mixtures or gas/vapour mixtures.

11. A device for working the method according to any of claims 1 to 10, comprising a measuring chamber (10) containing a detector arrangement (20) comprising a number of detectors (22, 24, 28, 30) each preceded by a radiation filter (32, 34, 36, 38) and detecting radiation travelling through a gas mixture at various wavelength ranges and converting it into electric output signals, characterised in that a threshold-value switch arrangement (54) is provided and, by comparing the output signals with threshold values each associated with a given concentration of gas in the gas mixture, generates a bit pattern (72), an evaluating unit is provided and stores the reference bit patterns defining the composition of the gas mixture, and the generated bit pattern is compared in the evaluating unit (74) with the stored reference bit patterns (84a, 84b), and the evaluation unit (74), depending on the result of comparison, delivers a signal of state (96) which characterises the danger state.

12. A device according to claim 11, characterised in that the detector arrangement (20) also contains a reference detector (26) which receives the radiation travelling through the gas mixture over a wide band and supplies a signal to a regulator (42) which adjusts the intensity of the radiation source (18) to a constant value at the place of the detectors (22 to 30).

13. A device according to claim 12, characterised in that a set-value generator (44) is provided and presets various values (Wi) of the radiation intensity, and a set (78, 80, 82) of reference bit patterns can be stored for each value (Wi).

14. A device according to claim 12 or 13, characterised in that the regulator (42) delivers an adjusting signal (46) to an actuator (40) and a differential component (48) is provided and detects the alteration in time of the adjusting signal (46) and generates a function signal (50) in dependence on the size of the alteration.

15. A device according to any of claims 11 to 14, characterised in that the detectors (22, 24, 28, 30) and the reference detector (26) are thermoelectric piles.

16. A device according to any of claims 11 to 15, characterised in that a wide-band radiation source (18) is disposed in the measuring chamber (10) at a distance from the detector arrangement (20).

17. A device according to claim 16, characterised in that the radiation source (18) is a Nernst lamp.

18. A device according to any of claims 11 to 17, characterised in that the filters (32, 34, 36, 38) are interference filters having a filter characteristic permeable to the absorption wavelength of certain gases.

19. A device according to any of claims 11 to 18, characterised in that the measuring chamber (10) has an inlet and an outlet opening (12; 14) for the passage of a sample of the gas mixture under analysis.

20. A device according to any of claims 11 to 19, characterised in that a thermal conductivity sensor (112) for measuring the thermal conductivity of the gas mixture under analysis is disposed in the measuring chamber (10) and its output is connected to the evaluation unit (74) and is provided with a diffusion cover (114).

21. A device according to claim 20, characterised in that the thermal conductivity sensor (112) contains means for measuring the thermal conductivity within a measuring interval at various temperatures along a preset temperature curve, and the evaluation unit (74) contains a comparator in order to compare the thermal conductivity measured in dependence on temperature with the thermal conductivity stored in the evaluation unit (74) as a function of the temperature for known gas mixtures and/or gas-vapour mixtures.

22. A device according to claim 21, characterised in that the thermal conductivity sensor (112) consists of three silicon chips stacked on one another to form cavities for receiving the gas mixture for analysis, the cavities and the silicon chips being separated from one another by thermally and electrically insulating diaphragms, on which resistance coils for heating and temperature measurement are disposed.

## Revendications

1. Procédé pour déceler des états dangereux dans un local, dans lequel la composition d'un mélange gazeux est analysée en exposant le mélange gazeux à un rayonnement à large bande d'une source de rayonnement (18), et en enregistrant le rayonnement qui traverse le mélange gazeux au moyen de plusieurs détecteurs (22, 24, 28, 30) travaillant dans différentes plages de longueurs d'onde, caractérisé en ce que les signaux de sortie des détecteurs (22, 24, 28, 30) sont comparés à des valeurs de seuil prédéfinies qui sont respectivement associées à une concentration d'un gaz donné dans le mélange gazeux, en produisant comme résultat de cette comparaison une combinaison de bits (72), en ce que plusieurs combinaisons de bits de référence (84a, 84b) sont fournies, qui définissent la composition du mélange gazeux, et en ce qu'un signal d'état (96), qui caractérise l'état dangereux, est délivré en fonction de la comparaison de la combinaison de bits produite (72) avec les combinaisons de bits de référence (84a, 84b).

2. Procédé selon la revendication 1, caractérisé en ce que le rayonnement à large bande émis par la source de rayonnement (18) est réglé de façon à être constant à l'endroit des détecteurs (22, 24, 26, 28, 30).

3. Procédé selon la revendication 2, caractérisé en ce qu'on effectue le réglage constant à différentes valeurs d'intensité, en ce qu'un jeu (78, 80, 82) de combinaisons de bits de référence est associé à chaque valeur, et en ce que le signal d'état (96) est produit pour chaque valeur d'intensité.

4. Procédé selon la revendication 2 ou 3, caractérisé en ce que, pour régler l'intensité du rayonnement, on produit un signal de réglage (46) dont la modification dans le temps est surveillée, et en ce qu'on produit, en fonction de la valeur de la modification, un signal fonctionnel (50, 90, 92) caractérisant l'état de fonctionnement de la source de rayonnement (18) et/ou du parcours de mesure.

5. Procédé selon l'une quelconque des revendications 2 à 4, caractérisé en ce qu'on utilise, pour déterminer le rayonnement constant à l'endroit des détecteurs (22, 24, 28, 30), un détecteur de référence (26) qui enregistre le rayonnement dans une plage de longueurs d'onde à large bande.

6. Procédé selon l'une quelconque des revendications précédentes, caractérisé en ce qu'on enregistre, en fonction du signal d'état (96), l'évolution dans le temps du signal de sortie d'au moins un détecteur (22, 24, 28, 30), et/ou l'on produit un signal de danger (94) en cas de sous-dépassement d'un seuil de danger.

7. Procédé selon l'une quelconque des revendications 1 à 6, caractérisé en ce qu'on fait passer un échantillon du mélange gazeux à analyser à travers une chambre de mesure (10) contenant les détecteurs (22, 24, 26, 28, 30).

8. Procédé selon l'une quelconque des revendications 1 à 7, caractérisé en ce qu'on utilise, au lieu d'une source de lumière (18) à large bande, une flamme régulée dont la température peut être réglée entre 3300°C et environ 800°C, afin que les gaz du mélange gazeux à analyser émettent un rayonnement électromagnétique dans des plages de longueurs d'onde typiques de ces gaz.

9. Procédé selon l'une quelconque des revendications 1 à 8, caractérisé en ce qu'en même temps que l'enregistrement du spectre d'absorption et/ou d'émission du mélange gazeux analysé, on mesure la conductibilité thermique de ce mélange.

10. Procédé selon la revendication 9, caractérisé en ce que la conductibilité thermique du mélange gazeux, ou du mélange gaz/vapeur, est mesurée pendant un intervalle de mesure à différentes températures, et en ce qu'on détermine l'allure de la conductibilité thermique en fonction de la température, et on la compare à des fonctions, représentant la conductibilité thermique en fonction de la température, qui ont été déterminées et mémorisées pour des mélanges gazeux ou des mélanges gaz/vapeur connus.

11. Dispositif pour la mise en oeuvre du procédé selon l'une quelconque des revendications 1 à 10, avec une chambre de mesure (10) dans laquelle est disposé un ensemble de détection (20) comprenant plusieurs détecteurs (22, 24, 28, 30), qui sont chacun précédés d'un filtre de rayonnement (32, 34, 36, 38) et qui enregistrent un rayonnement traversant un mélange gazeux dans différentes plages de longueurs d'onde et le transforment en signaux électriques de sortie, caractérisé en ce qu'il est prévu un dispositif de commutation à valeurs de seuil (54), qui produit une combinaison de bits (72) en comparant les signaux de sortie à des valeurs de seuil respectivement associées à une concentration d'un gaz donné dans le mélange gazeux, et en ce qu'il est prévu une unité d'évaluation dans laquelle sont mémorisées des combinaisons de bits de référence qui définissent la composition du mélange gazeux, la combinaison de bits produite étant comparée, dans l'unité d'évaluation (74), à la combinaison de bits de référence mémorisée (84a, 84b), et l'unité d'évaluation (74) produisant, en fonction du résultat de la comparaison, un signal d'état (96) qui caractérise l'état dangereux.

12. Dispositif selon la revendication 11, caractérisé en ce que l'ensemble de détection (20) comprend en outre un détecteur de référence (26), qui reçoit sur une large bande le rayonnement traversant le mélange gazeux et dont le signal peut être transmis à un régulateur (42), qui régle l'intensité du rayonnement de la source de rayonnement (18) à une valeur constante à l'endroit des détecteurs (22 à 30).

13. Dispositif selon la revendication 12, caractérisé en ce qu'il est prévu un afficheur de consignes (44), qui alloue différentes valeurs (Wi) de l'intensité de rayonnement, et en ce qu'un jeu (78, 80, 82) de combinaisons de bits de référence peut être mémorisé pour chaque valeur (Wi).

14. Dispositif selon la revendication 12 ou 13, caractérisé en ce que le régulateur (42) délivre un signal de réglage (46) à un organe de réglage (40), et en ce qu'est prévu un module différentiel (48), qui détermine la modification dans le temps du signal de réglage (46) et produit un signal fonctionnel (50) en fonction de la valeur de cette modification.

15. Dispositif selon l'une quelconque des revendications 11 à 14, caractérisé en ce que des thermopiles sont prévues comme détecteurs (22, 24, 28, 30) et comme détecteur de référence (26).

16. Dispositif selon l'une quelconque des revendications 11 à 15, caractérisé en ce qu'une source de rayonnement (18) à large bande est disposée à distance de l'ensemble de détection (20) dans la chambre de mesure (10).

17. Dispositif selon la revendication 16, caractérisé en ce qu'une lampe de Nernst est prévue comme source de rayonnement (18).

18. Dispositif selon l'une quelconque des revendications 11 à 17, caractérisé en ce que sont prévus comme filtres (32, 34, 36, 38) des filtres d'interférence, avec une caractéristique de filtrage laissant passer les longueurs d'onde d'absorption de gaz donnés.

19. Dispositif selon l'une quelconque des revendications 11 à 18, caractérisé en ce que la chambre de mesure (10) possède une ouverture d'admission et une ouverture de sortie (12; 14) pour le passage d'un échantillon du mélange gazeux à analyser.

20. Dispositif selon l'une quelconque des revendications 11 à 19, caractérisé en ce qu'un capteur de conductibilité thermique (112) est disposé dans la chambre de mesure (10) pour mesurer la conductibilité thermique du mélange gazeux à analyser, capteur dont la sortie est reliée à l'unité d'évaluation (74), et qui est pourvu d'un élément de recouvrement (114) permettant une diffusion.

21. Dispositif selon la revendication 20, caractérisé en ce que le capteur de conductibilité thermique (112) contient des moyens pour mesurer la conductibilité thermique pendant un intervalle de mesure à des températures différentes le long d'une allure de température prédéfinie, et en ce que l'unité d'évaluation (74) comprend un comparateur pour comparer la conductibilité thermique, mesurée en fonction de la température, à la conductibilité thermique qui a été mémorisée en fonction de la température, dans l'unité d'évaluation (74), pour des mélanges gazeux et/ou des mélanges gaz/vapeur connus.

22. Dispositif selon la revendication 21, caractérisé en ce que le capteur de conductibilité thermique (112) est constitué de trois puces ("chips") de silicium, qui sont empilées en formant des cavités pour recevoir le mélange gazeux à analyser, les cavités et les puces de silicium étant mutuellement séparées par des membranes thermiquement et électriquement isolantes, sur lesquelles sont disposés des serpentins de résistance pour le chauffage et la mesure de la température.
